# EUROPÄISCHE PATENTSCHRIFT

(11) **EP 3 453 594 B1**
(45) Veröffentlichungstag und Bekanntmachung des Hinweises auf die Patenterteilung: **09.12.2020**
(21) Anmeldenummer: 18189608.5
(22) Anmeldetag: 17.08.2018
(51) Int. Cl.: B62D 15/02, B60W 30/06, G08G 1/16, G08G 1/14, G05D 1/02

(54) **VERFAHREN UND COMPUTERBASIERTES SYSTEM ZUM AUTOMATISIERTEN BEREITSTELLEN EINER PARKLÜCKE**
METHOD AND COMPUTER-BASED SYSTEM FOR AUTOMATED PROVISION OF A PARKING SPACE
PROCÉDÉ ET SYSTÈME INFORMATIQUE DESTINÉS À LA MISE À DISPOSITION AUTOMATISÉE D'UN ESPACE DE STATIONNEMENT

(30) Priorität: 07.09.2017 DE 102017120661
(43) Veröffentlichungstag der Anmeldung: 13.03.2019
(73) Patentinhaber: Valeo Schalter und Sensoren GmbH, 74321 Bietigheim-Bissingen (DE)
(72) Erfinder: Maraslis, Christos, 71069 Sindelfingen (DE); Abbruzzesi, Fabio, 74321 Bietigheim-Bissingen (DE); Guechai, Wael, 74321 Bietigheim-Bissingen (DE)
(74) Vertreter: Pothmann, Karsten

(56) Entgegenhaltungen:
- DE-A1-102012 215 218
- DE-A1-102014 224 454

## Beschreibung

Die vorliegende Erfindung betrifft ein Verfahren zum automatisierten Bereitstellen einer Parklücke vorgegebener Größe durch ein selbsttätiges Umparken eines bereits geparkten Kraftfahrzeugs, wobei das Verfahren die folgenden Schritte umfasst:
(i) Ermitteln ob ein von dem geparkten Kraftfahrzeug befahrbares Umgebungsgebiet des Kraftfahrzeugs ausreicht um durch ein Umparken des Kraftfahrzeugs den Raum für die bereitzustellende Parklücke zu schaffen und (ii) bei ausreichendem Umgebungsbereich entsprechendes selbsttätiges Umparken des Kraftfahrzeugs.

Die Erfindung betrifft weiterhin ein entsprechendes Computerprogrammprodukt und ein entsprechendes computerbasiertes System.

Ein solches Verfahren zum automatisierten Bereitstellen einer Parklücke vorgegebener Größe durch ein selbsttätiges Umparken eines bereits geparkten Kraftfahrzeugs ist beispielsweise aus der Druckschrift EP 2 886 420 A1 bekannt. Ein zu parkendes Fahrzeug lässt den Parkwunsch in einer von zumindest einem bereits geparkten Kraftfahrzeug begrenzten Lücke erkennen. Die Größe der zu schaffenden Parklücke ergibt sich aus den Dimensionen des einzuparkenden Fahrzeugs. Daraufhin wird ermittelt, ob ein Umgebungsgebiet von dem geparkten Kraftfahrzeug oder zumindest einem der geparkten Kraftfahrzeuge ausreicht, um durch Umsetzen des Kraftfahrzeugs oder der Kraftfahrzeuge den Raum für die bereitzustellende Parklücke zu schaffen und bei ausreichendem Umgebungsgebiet erfolgt ein entsprechendes selbsttätiges Umparken des bereits geparkten Kraftfahrzeugs beziehungsweise der geparkten Kraftfahrzeuge.

Durch dieses Verfahren kann ein Parkplatz für ein aktuell am Ort befindliches und zu parkendes Fahrzeug geschaffen werden. Die Anzahl der zur Verfügung stehenden Parkplätze ändert sich jedoch nicht, da das zu parkende Fahrzeug in der Regel unmittelbar anschließend einparkt.

Die Druckschrift DE102012215218 A1, die als nächstliegender Stand der Technik angesehen wird, offenbart ein Verfahren und ein System gemäß dem Oberbegriff der unabhängigen Ansprüche 1 bzw. 9.

Ausgehend von dem oben genannten Stand der Technik liegt der Erfindung somit die Aufgabe zugrunde, Maßnahmen zum automatisierten Bereitstellen einer Parklücke vorgegebener Größe durch ein selbsttätiges Umparken eines bereits geparkten Kraftfahrzeugs anzugeben, die es ermöglichen, vermehrt Parkplätze bereitzustellen und somit ein größeres Angebot an nutzbarem Parkraum zu schaffen, wodurch ein Beitrag zur effizienteren Nutzung des zum Parken zur Verfügung stehenden Raumes geleistet wird.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Bei dem Verfahren zum automatisierten Bereitstellen einer Parklücke vorgegebener Größe durch ein selbsttätiges Umparken eines bereits geparkten Kraftfahrzeugs, welches die folgenden Schritte umfasst:
(i) Ermitteln ob ein von dem geparkten Kraftfahrzeug befahrbares Umgebungsgebiet des Kraftfahrzeugs ausreicht um durch ein Umparken des Kraftfahrzeugs den Raum für die bereitzustellende Parklücke zu schaffen und
(ii) bei ausreichendem Umgebungsgebiet entsprechendes selbsttätiges Umparken des Kraftfahrzeugs,
ist erfindungsgemäß vorgesehen, dass das automatisierte Bereitstellen der Parklücke unabhängig von einer konkreten Parkanfrage zum Parken eines Fahrzeugs erfolgt. Erfindungsgemäß werden die Schritte des Verfahrens ausschließlich mittels eines fahrzeuginternen, computergestützten Systems durchgeführt, welches zum autonomen Parken des Fahrzeugs eingerichtet ist. Z

Entscheidend bei diesem Verfahren ist also, dass nicht erst der konkrete Parkwunsch eines zu parkenden Fahrzeug erkannt werden muss. Das Bereitstellen der Parklücke wird auf andere Weise getriggert, sodass die geparkten Kraftfahrzeuge Parklücken vorgegebener Größe für entsprechende Fahrzeuge "vorhalten". Im einfachsten Fall gibt es ein regelmäßig auftretendes Triggersignal für das Bereitstellen der Parklücke, welches unabhängig von einer konkreten Parkanfrage zum Parken eines Fahrzeugs ist.

Die Größe der bereitzustellenden/bereitgestellten Parklücke wird in der Regel nicht durch ein vor Ort befindliches Fahrzeug vorgegeben, sondern ergibt sich beispielsweise durch Definitionen und/oder Vorgaben, wie sie zum Beispiel für Stellplätze, also Flächen zum Abstellen von Fahrzeugen außerhalb der öffentlichen Verkehrsflächen, bekannt sind. Stellplätze sind in der Regel zwischen 2,3 m (normaler Pkw-Stellplatz ohne seitliche Begrenzung) und 3,5 m (Stellplatz für Behinderte) breit. Je nach Anordnung des Stellplatzes kann die erforderliche Länge zwischen 5 m (90°-Anordnung zur Straße) und 6,0 m (parallel zur Straße) betragen.

Die Vorgabe der Größe der Parklücke kann selbstverständlich auch die Vorgabe einer Mindestgröße dieser Parklücke sein.

Gemäß einer bevorzugten Ausgestaltung der Erfindung wird zur Ermittlung, ob das befahrbarer Umgebungsgebiet des geparkten Kraftfahrzeugs ausreicht um durch ein Umparken des Kraftfahrzeugs den Raum für die bereitzustellende Parklücke zu schaffen, eine entsprechende Trajektorie eines Umparkmanövers berechnet.

Gemäß einer weiteren bevorzugten Ausgestaltung der Erfindung ist vorgesehen, dass das Ermitteln, ob das vom Kraftfahrzeug befahrbare Umgebungsgebiet zur Schaffung der Parklücke ausreicht, mittels eines optischen und/oder akustischen Sensorsystems erfolgt. Die entsprechenden Sensoren derartiger Sensorsysteme sind bevorzugt Abstandssensoren. Optische und/oder akustische Sensorsysteme, die sich für diesen Zweck eignen, sind insbesondere die aus Einparkhilfen bekannten Sensorsysteme wie Radar-basierte Systeme, Ultraschall-basierte Systeme, Kamera-basierte Systeme.

Gemäß noch einer weiteren bevorzugten Ausgestaltung der Erfindung ist vorgesehen, dass die Parklücke in einem vorgegebenen Umgebungsbereich des Kraftfahrzeugs, insbesondere vor oder hinter dem Kraftfahrzeug, liegt. Dabei ist insbesondere vorgesehen, dass das entsprechende Umparkmanöver ein Vorziehen oder Zurücksetzen des Kraftfahrzeugs ist.

Gemäß einer bevorzugten Ausführungsform der Erfindung wird das Verfahren von einem als Fahrzeugsystem zum autonomen Parken des umzuparkenden Kraftfahrzeugs ausgebildeten computergestützen System durchgeführt. Derartige Systeme sind prinzipiell bekannt. Sie unterscheiden sich von Systemen, die beispielsweise für das aus der Druckschrift EP 2 886 420 A1 bekannte Verfahren genutzt werden lediglich dadurch, dass ein anderer Triggerprozess genutzt wird und dass die Größe der bereitzustellenden/bereitgestellten Parklücke anders vorgegeben wird.

Gemäß einer weiteren bevorzugten Ausführungsform der Erfindung ist vorgesehen, dass ein Datenabgleich erfolgt, ob der Raum für die bereitzustellende Parklücke zum Parken von Fahrzeugen vorgesehen beziehungsweise geeignet ist.

Bei dem erfindungsgemäßen Computerprogrammprodukt ist vorgesehen, dass dieses Programmteile umfasst, die in einem Prozessor eines computergestützten Systems geladen zur Durchführung des vorstehend genannten Verfahrens eingerichtet sind.

Bei dem erfindungsgemäßen computergestützten System zum automatisierten Bereitstellen einer Parklücke vorgebbarer Größe durch ein selbsttätiges Umparken eines bereits geparkten Kraftfahrzeugs, welches zur Durchführung der folgenden Schritte eingerichtet ist: (i) ermitteln ob ein von dem geparkten Kraftfahrzeug befahrbares Umgebungsgebiet des Kraftfahrzeugs ausreicht um durch ein Umparken des Kraftfahrzeugs den Raum für die bereitzustellende Parklücke zu schaffen und (ii) bei ausreichendem Umgebungsgebiet entsprechendes selbsttätiges Umparken des Kraftfahrzeugs, ist vorgesehen, dass das System weiterhin eingerichtet ist, die Schritte unabhängig von einer konkreten Parkanfrage zum Parken eines Fahrzeugs durchzuführen.

Erfindungsgemäß ist das computergestützte System ein fahrzeuginternes System des umzuparkenden Kraftfahrzeugs, welches zum autonomen Parken dieses Kraftfahrzeugs eingerichtet ist. Das System ist insbesondere ein System zur Durchführung des vorstehend genannten Verfahrens.

Nachfolgend wird die Erfindung unter Bezugnahme auf die anliegenden Zeichnungen anhand einer bevorzugten Ausführungsform näher erläutert.

Es zeigt
- Fig. 1: Eine Parksituation, bei der mehrere Kraftfahrzeuge derart in einer Reihe stehen, dass die Lücken zwischen den Fahrzeugen nicht zum Einparken eines weiteren Fahrzeugs ausreichen,
- Fig. 2: Eines der geparkten Kraftfahrzeuge beim Ermitteln, ob ein Umgebungsgebiet hinter dem Kraftfahrzeug ausreicht, um durch Umparken des Kraftfahrzeugs den Raum für eine Parklücke vor dem Kraftfahrzeug zu schaffen und

- Fig. 3: Die Kraftfahrzeugreihe mit der geschaffenen Parklücke und einem weiteren Fahrzeug, für das diese Parklücke hinreichend groß ist.

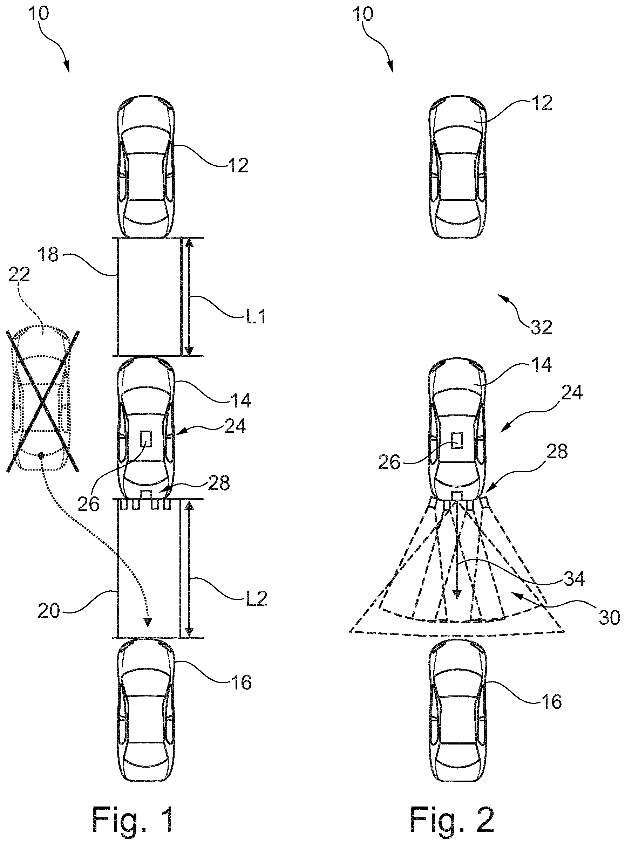

In Fig. 1 ist eine Straßensituation aus der Vogelperspektive gezeigt. Am Rand einer Straße 10 sind mehrere Kraftfahrzeuge 12, 14, 16 in einer Reihe hintereinander geparkt. Zwischen den einzelnen Kraftfahrzeugen 12, 16, 16 ergeben sich Lücken 18, 20 unterschiedlicher Größe L1, L2. Im hier gezeigten Beispiel sind drei geparkte Kraftfahrzeuge 12, 14, 16 gezeigt, sodass sich zwei Lücken 18, 20 ergeben, eine Lücke 18 vor dem Kraftfahrzeug 14 in der Mitte und eine Lücke 20 hinter diesem Kraftfahrzeug 14. Beide Lücken 18, 20 haben im Groben die gleiche Größe L1 ≈ L2 von ungefähr einer Fahrzeuglänge der gezeigten Kraftfahrzeuge 12, 14, 16. Sie können zum Beispiel durch kleinere Fahrzeuge (nicht gezeigt) bedingt sein, die zuvor in diesen Lücken 18, 20 geparkt waren oder durch Hindernisse wie etwa abgestellte Mülltonnen, etc. Die Lücken der gezeigten Größe L1, L2 sind jedoch nicht für das Einparken weiterer Fahrzeuge 22 geeignet, die in etwa die gleichen Dimensionen besitzen wie die gezeigten Kraftfahrzeuge 12, 14, 16, da eine zum Parken nutzbare Lücke für das Einparkmanöver immer etwas mehr Platz bieten muss als von der Fahrzeuggröße (hier beim Parken in Reihe hintereinander der Fahrzeuglänge) vorgegeben. Das durchgestrichene rückwärts in die Lücke 20 einparkende Fahrzeug 22 soll andeuten, dass ein solches Parken für ein Fahrzeug dieser Größe nicht möglich ist.

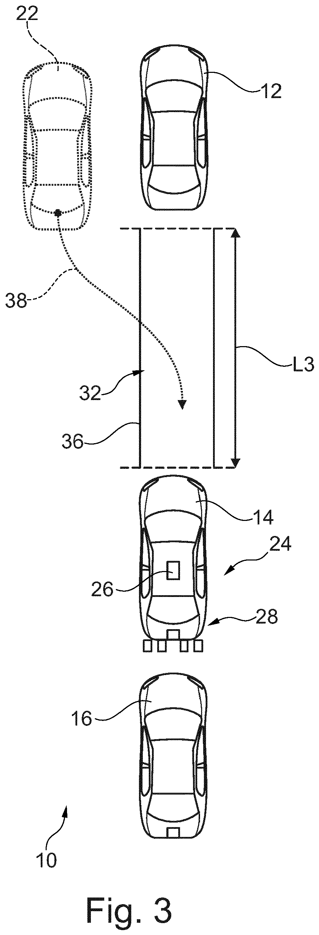

Das geparkte Kraftfahrzeug 14 in der Mitte weist ein als fahrzeuginternes System ausgebildetes computergestützte System 24 mit einem Steuergerät 26 und mehreren Sensoren eines optischen Sensorsystems 28 auf, welches zum autonomen Parken dieses Kraftfahrzeugs 14 eingerichtet ist. Das Sensorsystem 28 weist neben den gezeigten Sensoren zumindest auch im Frontbereich des Kraftfahrzeugs 14 weitere Sensoren auf, die jedoch nicht gezeigt sind. Das hier gezeigte Sensorsystem 28 ist Kamera- und Ultraschall-basiert und weist eine Kamera sowie mehrere Ultraschallsensoren auf. Das computergestützte System 24 ist ein System zum automatisierten Bereitstellen einer Parklücke 36 vorgebbarer Größe durch ein selbsttätiges Umparken eines bereits geparkten Kraftfahrzeugs 14. Das Bereitstellen der Parklücke wird dabei durch ein Triggersignal getriggert, welches unabhängig von einer konkreten Parkanfrage zum Parken eines Fahrzeugs 22 ist. Im vorliegenden Fall gibt es ein regelmäßig auftretendes Triggersignal für das Bereitstellen der Parklücke, welches unabhängig von einer konkreten Parkanfrage zum Parken eines Fahrzeugs 22 auftritt. Die Figuren 2 und 3 zeigen nun den Ablauf des automatisierten Bereitstellens einer Parklücke 36 sowie dessen Resultat. Mittels des Sensorsystems 28 ermittelt das System 24, ob ein von dem geparkten Kraftfahrzeug 14 befahrbares Umgebungsgebiet 30 des Kraftfahrzeugs 14 ausreicht, um durch ein Umparken des Kraftfahrzeugs 14 in einem Umgebungsbereich 32 des Kraftfahrzeugs 14 den Raum für eine Parklücke 36 zu schaffen. Dies ist im vorliegenden Fall möglich. Mittels des Sensorsystems 28 erkennt das System 24, dass die Lücke 20 ein ausreichend großes Umgebungsgebiet 30 ist, und parkt das Kraftfahrzeugs 14 entsprechend selbsttätig um (Pfeil 34).

Im vorliegenden Fall wird eine Parklücke 36 in einem vorgegebenen Umgebungsbereich 32 vor dem Kraftfahrzeug 14 geschaffen. Das entsprechende Umparkmanöver ist ein einfaches Zurücksetzen des Kraftfahrzeugs 14 (Pfeil 34), wie in Fig. 2 gezeigt.

Die Größe der bereitzustellenden/bereitgestellten Parklücke 36 wird nicht durch ein vor Ort befindliches Fahrzeug 22 vorgegeben, sondern ergibt sich durch Definitionen und/oder Vorgaben. Derartige Vorgaben sind zum Beispiel für Stellplätze, also Flächen zum Abstellen von Fahrzeugen 22 außerhalb der öffentlichen Verkehrsflächen, bekannt. Stellplätze sind in der Regel zwischen 2,3 m (normaler Pkw-Stellplatz ohne seitliche Begrenzung) und 3,5 m (Stellplatz für Behinderte) breit. Je nach Anordnung des Stellplatzes kann die erforderliche Länge zwischen 5 m (90°-Anordnung zur Straße) und 6,0 m (parallel zur Straße) betragen.

Die Fig. 3 zeigt das Resultat des Umparkmanövers: Im Umgebungsbereich 32 vor dem umgeparkten Kraftfahrzeug 14 ist nun eine Parklücke 36 vorgegebener Größe L3 geschaffen. Die Größe L3 reicht aus, dass ein weiteres Fahrzeug 22 aus der Fahrzeug-Gruppe der Personenkraftwagen (PKW) in die Parklücke 36 zum Beispiel rückwärts eingeparkt werden kann (Pfeil 38).

Das Umparken des Kraftfahrzeugs 14 ist im gezeigten Beispiel besonders einfach möglich. Ergeben sich weitere Hindernisse, zum Beispiel ein Knick im Straßenverlauf, eine Bordsteinkante, etc. so wird zur Ermittlung, ob das befahrbarer Umgebungsgebiet 30 des geparkten Kraftfahrzeugs 14 ausreicht, um durch ein Umparken des Kraftfahrzeugs 14 den Raum für die bereitzustellende Parklücke 36 zu schaffen, eine entsprechende Trajektorie des durchzuführenden Umparkmanövers berechnet.

Die Frage, ob ein Umgebungsgebiet 30 von dem geparkten Kraftfahrzeug 14 befahrbar ist, hängt nicht unbedingt nur von physikalisch ermittelbaren Größen ab, sondern unter anderem auch von gesetzlichen Vorgaben. Um hier alle beschränkenden Faktoren zu berücksichtigen, erfolgt ein Datenabgleich, ob der Raum für die bereitzustellende Parklücke 36 und/oder das Umgebungsgebiet 30 zum Parken von beziehungsweise zum Befahren mit Fahrzeugen 10, 12, 14, 22 vorgesehen/geeignet ist. Dieser Datenabgleich erfolgt über eine GPS-Messung (GPS: Global Positioning System - Globales Positionsbestimmungssystem) bezüglich des Kraftfahrzeugs 14 sowie einen Server, der die Ortsdaten mit entsprechenden Informationen wie Halteverbot, Parkverbot, etc. verknüpft.

Das computergestützte System 24 muss nicht unbedingt von einem Fahrzeugsystem zum autonomen Parken gebildet sein. Es kann sich auch um ein fahrzeugübergreifendes System 24 handeln, welches von den Fahrzeugsystemen mehrerer Kraftfahrzeuge 12, 14, 16 gebildet ist. Alternativ kann es auch ein System 24 sein, welches einen zentralen Server aufweist, der Kraftfahrzeug-unabhängig ist. Dieser kann im einfachsten Fall das Triggersignal vorgeben, welches das automatisierte Bereitstellen von Parklücken 38 durch selbsttätiges Umparken bereits geparkter Kraftfahrzeuge 14 auslöst. Das Triggersignal kann beispielsweise so gewählt sein, dass es mit einer gewünschten Parkplatzdichte in einer vorgegebenen Region korreliert, in der dieses Triggersignal ausgegeben wird.

Selbstverständlich kann ein solches automatisierten Bereitstellen einer Parklücke 38 auch ganz unabhängig von Straßen erfolgen. Beispielsweise könnte auf diese Weise die Ausnutzung eines vorgegebenen Areals zum Parken von Fahrzeugen 12, 14, 16, 22 optimiert werden.

Im Folgenden sollen einzelne Aspekte der Erfindung noch einmal mit anderen Worten beschrieben werden:
Grundgedanke ist es, neue Parklücken 38 aus einer bestehenden Parksituation heraus zu schaffen, indem zumindest eines der geparkten Kraftfahrzeuge 14 automatisch neu positioniert wird. Um dies zu tun, vermisst das geparkte Kraftfahrzeug 14 seine Umgebung und berechnet, ob es einen Parkplatz/eine Parklücke 36 schaffen würde, wenn es auf ein weiteres Fahrzeug aufschließt. Wenn dies möglich ist, startet das System 24 den Motor des Kraftfahrzeugs 14 und führt das Kraftfahrzeug 14 autonom zur gewünschten Position, um einen oder mehrere Parklücken 36 zu schaffen.

Es ist auch möglich, das System 24 mit einem Cloud Service zu kombinieren, um die Performance zu verbessern, indem überprüft wird, ob der vorgegebene Umgebungsbereich 32 zu einem Parkplatz gehört.

### Bezugszeichenliste

| | |
|---|---|
| Straße | 10 |
| Kraftfah rzeug | 12 |
| Kraftfah rzeug | 14 |
| Kraftfah rzeug | 16 |
| Lücke | 18 |
| Lücke | 20 |
| weiteres Fahrzeug | 22 |
| System | 24 |
| Steuergerät | 26 |
| Sensor | 28 |
| Umgebungsgebiet | 30 |
| Umgebungsbereich | 32 |
| Pfeil | 34 |
| Parklücke | 36 |
| Pfeil | 38 |
| Größe der Lücke | L1 |
| Größe der Lücke | L2 |
| Größe der Parklücke | L3 |

## Patentansprüche

1. Verfahren zum automatisierten Bereitstellen einer Parklücke (36) vorgegebener Größe (L3) durch ein selbsttätiges Umparken eines bereits geparkten Kraftfahrzeugs (14), wobei das Verfahren die folgenden Schritte umfasst:
Ermitteln ob ein von dem geparkten Kraftfahrzeug (14) befahrbares Umgebungsgebiet (30) des Kraftfahrzeugs (14) ausreicht um durch ein Umparken des Kraftfahrzeugs (14) den Raum für die bereitzustellende Parklücke (36) zu schaffen und
bei ausreichendem Umgebungsgebiet (30) entsprechendes selbsttätiges Umparken des Kraftfahrzeugs (14),
wobei das automatisierte Bereitstellen der Parklücke (36) unabhängig von einer konkreten Parkanfrage zum Parken eines Fahrzeugs (22) erfolgt, **dadurch gekennzeichnet, dass** die Schritte ausschließlich mittels eines fahrzeuginternen, computergestützten Systems (24), welches zum autonomen Parken des Kraftfahrzeugs (14) eingerichtet ist, ausgeführt werden.

2. Verfahren nach Anspruch 1, **dadurch gekennzeichnet, dass** zur Ermittlung, ob das befahrbarer Umgebungsgebiet (30) des geparkten Kraftfahrzeugs (14) ausreicht um durch ein Umparken des Kraftfahrzeugs (14) den Raum für die bereitzustellende Parklücke (36) zu schaffen, eine entsprechende Trajektorie eines Umparkmanövers berechnet wird.

3. Verfahren nach Anspruch 1 oder 2, **dadurch gekennzeichnet, dass** das Ermitteln, ob das vom Kraftfahrzeug (14) befahrbare Umgebungsgebiet (30) zur Schaffung der Parklücke (36) ausreicht, mittels eines optischen und/oder akustischen Sensorsystems (28) erfolgt.

4. Verfahren nach einem der Ansprüche 1 bis 3, **dadurch gekennzeichnet, dass** die Parklücke (36) in einem vorgegebenen Umgebungsbereich (32) des Kraftfahrzeugs (14), insbesondere vor oder hinter dem Kraftfahrzeug (14), liegt.

5. Verfahren nach Anspruch 4, **dadurch gekennzeichnet, dass** das entsprechende Umparkmanöver ein Vorziehen oder Zurücksetzen des Kraftfahrzeugs (14) ist.

6. Verfahren nach einem der Ansprüche 1 bis 5, **dadurch gekennzeichnet, dass** das Verfahren von einem als Fahrzeugsystem zum autonomen Parken des umzuparkenden Kraftfahrzeugs (14) ausgebildeten computergestützen System (24) durchgeführt wird.

7. Verfahren nach einem der Ansprüche 1 bis 6, **gekennzeichnet durch** einen Datenabgleich, ob der Raum für die bereitzustellende Parklücke (36) zum Parken von Fahrzeugen (10, 12, 14, 22) vorgesehen und/oder geeignet ist.

8. Computerprogrammprodukt umfassend Programmteile, die in einem Prozessor eines computergestützten Systems (24) geladen zur Durchführung des Verfahrens nach einem der Ansprüche 1 bis 7 eingerichtet sind.

9. Computergestütztes System (24) zum automatisierten Bereitstellen einer Parklücke (36) vorgebbarer Größe durch ein selbsttätiges Umparken eines bereits geparkten Kraftfahrzeugs (14), wobei das System (24) zur Durchführung der folgenden Schritte eingerichtet ist: ermitteln ob ein von dem geparkten Kraftfahrzeug (14) befahrbares Umgebungsgebiet (30) des Kraftfahrzeugs (14) ausreicht um durch ein Umparken des Kraftfahrzeugs (14) den Raum für die bereitzustellende Parklücke (36) zu schaffen und bei ausreichendem Umgebungsgebiet (30) entsprechendes selbsttätiges Umparken des Kraftfahrzeugs (14), wobei das System (24) weiterhin eingerichtet ist, die Schritte unabhängig von einer konkreten Parkanfrage zum Parken eines Fahrzeugs (22) durchzuführen, **dadurch gekennzeichnet, dass** das computergestützte System (24) ein fahrzeuginternes System des umzuparkenden Kraftfahrzeugs (14) ist, welches zum autonomen Parken dieses Kraftfahrzeugs (14) eingerichtet ist.

## Claims

1. Method for automated provision of a parking space (36) of a predefined size (L3) by automatic reparking an already parked motor vehicle (14), wherein the method comprises the following steps:
determining whether a surrounding area (30) of the motor vehicle (14), on which the parked motor vehicle (14) can travel, is sufficient to provide, by reparking the motor vehicle (14), the room for the parking space (36) which is to be made available, and
when there is sufficient surrounding area (30), corresponding automatic reparking of the motor vehicle (14),
wherein the automated provision of the parking space (36) is carried out independently of a specific parking request to park a vehicle (22), **characterized in that** the steps are excluded exclusively by means of a vehicle-internal, computer-based system (24) which is configured to park the motor vehicle (14) autonomously.

2. Method according to Claim 1, **characterized in that** in order to determine whether the surrounding area (30) of the parked motor vehicle (14), which can be travelled on by said motor vehicle, is sufficient to provide, when reparking the motor vehicle (14), the room for the parking space (36) which is to be made available, a corresponding trajectory of a reparking manoeuvre is calculated.

3. Method according to Claim 1 or 2, **characterized in that** the determination as to whether the surrounding area (30) which can be travelled on by the motor vehicle (14) is sufficient to provide the parking space (36) is carried out by means of an optical and/or acoustic sensor system (28).

4. Method according to one of Claims 1 to 3, **characterized in that** the parking space (36) lies in a predefined surrounding area (32) of the motor vehicle (14), in particular in front of or behind the motor vehicle (14).

5. Method according to Claim 4, **characterized in that** the corresponding reparking manoeuvre comprises pulling forward or moving back the motor vehicle (14) .

6. Method according to one of Claims 1 to 5, **characterized in that** the method is carried out by a computer-based system (24) which is embodied as a vehicle system for autonomously parking the motor vehicle (14) which is to be reparked.

7. Method according to one of Claims 1 to 6, **characterized by** data reconciliation to determine whether the room for the parking space (36) which is to be made available is provided and/or is suitable for parking vehicles (10, 12, 14, 22).

8. Computer program product comprising program parts which are loaded into a processor of a computer-based system (24) for carrying out the method and are configured according to one of Claims 1 to 7.

9. Computer-based system (24) for automated provision of a parking space (36) of a predefinable size by automatically reparking an already parked motor vehicle (14), wherein the system (24) is configured to carry out the following steps: determining whether a surrounding area (30) of the motor vehicle (14), on which the parked motor vehicle (14) can travel, is sufficient to provide, by reparking the motor vehicle (14), the room for the parking space (36) which is to be made available, and when there is sufficient surrounding area (30), corresponding automatic reparking of the motor vehicle (14), wherein the system (24) is also configured to carry out the steps independently of a specific parking request to park a vehicle (22), **characterized in that** the computer-based system (24) is a vehicle-internal system of the motor vehicle (14) which is to be reparked, which system is configured to park this motor vehicle (14) autonomously.

## Revendications

1. Procédé pour la mise à disposition automatisée d'une place de stationnement (36) de dimension prédéfinie (L3) en changeant automatiquement de place un véhicule automobile (14) déjà en stationnement, le procédé comprenant les étapes suivantes consistant à :
déterminer si une région environnante (30) du véhicule automobile (14) accessible au véhicule automobile (14) en stationnement est suffisante pour qu'un changement de place du véhicule automobile (14) permette de créer l'espace pour la place de stationnement (36) à mettre à disposition, et
si la région environnante (30) est suffisante, changer automatiquement le véhicule automobile (14) de place de manière adéquate,
dans lequel la mise à disposition automatisée de la place de stationnement (36) est effectuée indépendamment d'une demande de stationnement concrète pour garer un véhicule (22), **caractérisé en ce que** les étapes sont effectuées exclusivement au moyen d'un système informatique (24) interne au véhicule qui est conçu pour garer le véhicule automobile (14) de manière autonome.

2. Procédé selon la revendication 1, **caractérisé en ce qu'**une trajectoire adéquate d'une manœuvre de changement de place est calculée pour déterminer si la région environnante accessible (30) du véhicule automobile (14) en stationnement est suffisante pour qu'un changement de place du véhicule automobile (14) permette de créer l'espace pour la place de stationnement (36) à mettre à disposition.

3. Procédé selon la revendication 1 ou 2, **caractérisé en ce que** la détermination si la région environnante (30) accessible au véhicule automobile (14) est suffisante pour créer la place de stationnement (36) est effectuée par un système de capteur (28) optique et/ou acoustique.

4. Procédé selon l'une quelconque des revendications 1 à 3, **caractérisé en ce que** la place de stationnement (36) se trouve dans une zone environnante prédéfinie (32) du véhicule automobile (14) en particulier devant ou derrière le véhicule automobile (14).

5. Procédé selon la revendication 4, **caractérisé en ce que** la manœuvre de changement de place adéquate est une marche avant ou une marche arrière du véhicule automobile (14).

6. Procédé selon l'une quelconque des revendications 1 à 5, **caractérisé en ce que** le procédé est effectué par un système informatique (24) réalisé sous la forme d'un système de véhicule pour garer de manière autonome le véhicule automobile (14) à changer de place.

7. Procédé selon l'une quelconque des revendications 1 à 6, **caractérisé par** un rapprochement de données pour savoir si l'espace pour la place de stationnement (36) à mettre à disposition est prévu et/ou adapté pour garer des véhicules (10, 12, 14, 22).

8. Produit de programme informatique, comprenant des parties de programme qui sont chargées sur un processeur d'un système informatique (24) pour exécuter le procédé selon l'une quelconque des revendications 1 à 7.

9. Système informatique (24) pour la mise à disposition automatisée d'une place de stationnement (36) de dimension prédéfinissable par un changement de place automatique d'un véhicule automobile (14) déjà en stationnement, le système (24) étant conçu pour exécuter les étapes suivantes consistant à : déterminer si une région environnante (30) du véhicule automobile (14) accessible au véhicule automobile (14) en stationnement est suffisante pour qu'un changement de place du véhicule automobile (14) permette de créer l'espace pour la place de stationnement (36) à mettre à disposition, et si la région environnante (30) est suffisante, changer automatiquement le véhicule automobile (14) de place de manière adéquate, le système (24) étant en outre conçu pour exécuter les étapes indépendamment d'une demande de stationnement concrète pour garer un véhicule (22), **caractérisé en ce que** le système informatique (24) est un système interne au véhicule du véhicule automobile (14) à changer de place qui est conçu pour garer ce véhicule automobile (14) de manière autonome.
